(19) Europäisches Patentamt

European Patent Office

Office européen des brevets

(11) EP 2 362 536 A2

## (12) EUROPEAN PATENT APPLICATION

| | |
|---|---|
| (43) Date of publication:<br>31.08.2011 Bulletin 2011/35 | (51) Int Cl.:<br>$H02P\ 3/06$ (2006.01)  $H02P\ 6/16$ (2006.01)<br>$H02P\ 6/24$ (2006.01)  $G05B\ 19/19$ (2006.01) |
| (21) Application number: 11155592.6 | |
| (22) Date of filing: 23.02.2011 | |

| | |
|---|---|
| (84) Designated Contracting States:<br>AL AT BE BG CH CY CZ DE DK EE ES FI FR GB<br>GR HR HU IE IS IT LI LT LU LV MC MK MT NL NO<br>PL PT RO RS SE SI SK SM TR<br>Designated Extension States:<br>BA ME | (72) Inventor: Ide, Yuji<br>Tokyo (JP)<br><br>(74) Representative: Wilson Gunn<br>5th Floor, Blackfriars House<br>The Parsonage<br>Manchester<br>Lancashire M3 2JA (GB) |
| (30) Priority: 23.02.2010 JP 2010037128 | |
| (71) Applicant: Sanyo Denki Co., Ltd.<br>Tokyo (JP) | |

## (54) Motor control method and motor control system

(57) Provided herein is a fixed-position stop control system capable of achieving positioning of a motor at high speed while decelerating the motor with as large a torque as possible and while achieving a reduction in overshoot at the positioning time. After the rotational speed of a rotor of a motor M is reduced to an orientation speed, a control section 7 gives a deviation between a speed designated by a position loop speed command vc and a squared speed $v^2$ to a speed controller 4. An addition section 7 adds a torque addition command ac determined by the control section 7 to a torque command tc output from the speed controller 4 to obtain an added torque command atc. The added torque command is given to a torque controller 6. Then, the position and speed of the rotor are controlled according to a sliding curve defined by using physical parameters used for the orientation control so as to stop the rotor at a target position. Thus, the sliding mode control is used to adjust the input to the torque controller.

*Fig.1*

EP 2 362 536 A2

**Description**

BACKGROUND OF THE INVENTION

Field of the Invention

The present invention relates to a motor control method and a motor control system capable of stopping a rotor of a motor at a fixed position.

Description of the Related Art

As to a method of controlling the motor used for driving a main shaft of a working machine, there is a known technique for stopping a rotor of the motor at a desired position. Conventionally, the motor is operated under a speed control until the motor speed reaches a certain speed (orientation speed) and, after that, the control mode is switched from the speed control to a position control so as to perform the position control based on a designated stop position.

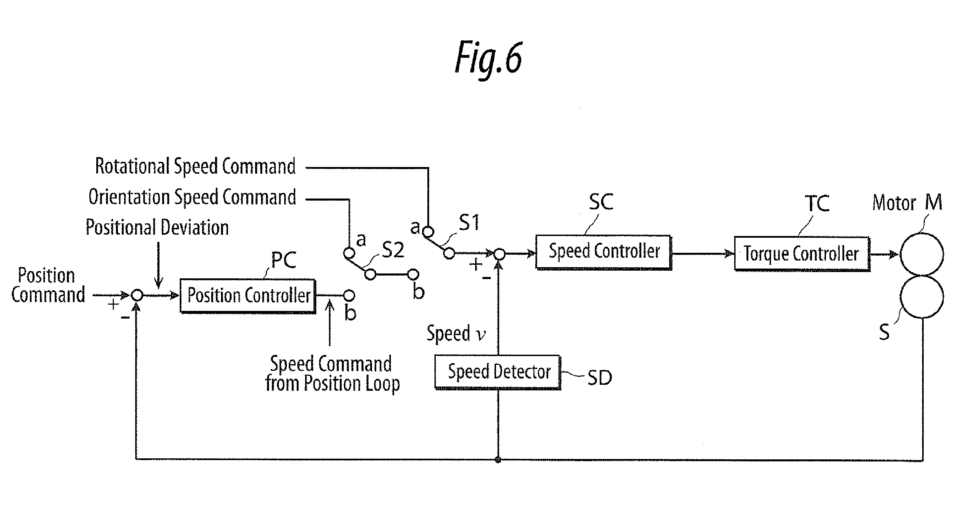

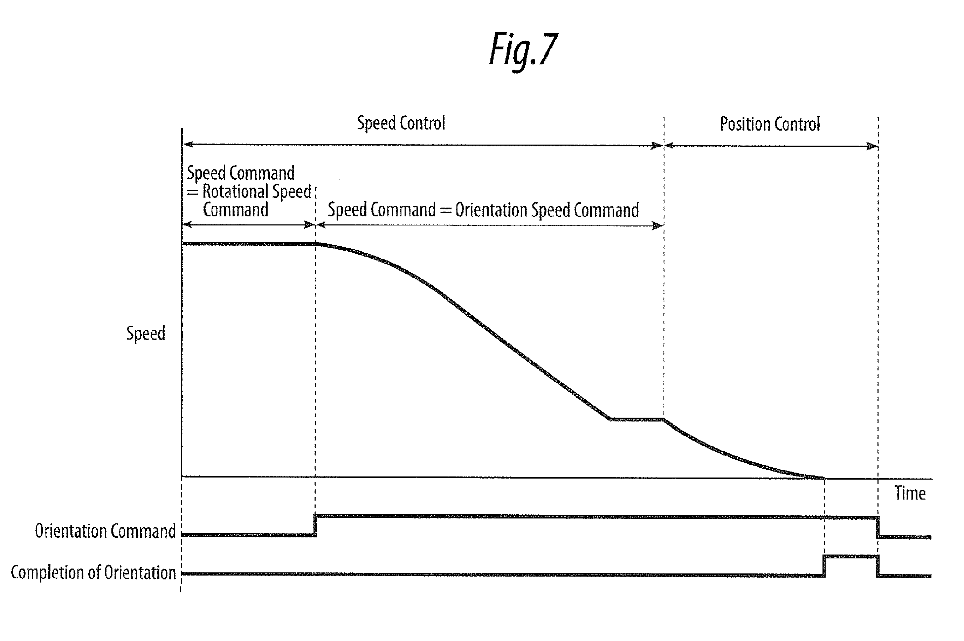

FIG. 6 is a block diagram illustrating an example configuration of a conventional motor control system. FIG. 7 is an operation waveform diagram illustrating operation of the conventional motor control system. The position of a rotor of a motor M is detected by a position sensor S such as an encoder. The output of the position sensor S is input to a speed detector SD, and the speed detector SD detects the speed (signal corresponding to the speed) of the rotor based on the output of the position sensor S and outputs the detected speed. In this conventional system, a switch S1 is connected to a terminal a, whereby a deviation between a rotational speed command and the actual rotor speed is input to a speed controller SC, and the speed controller SC outputs a torque command to a torque controller TC. Based on the torque command, the torque controller TC outputs a current command to control the motor M such that the torque of the motor M coincides with the torque command value. In this example, it is assumed that a controller for controlling the motor current in accordance with the current command is implemented in the torque controller. When an orientation speed command is output from an upper controller so as to stop the motor, the switches S1 and S2 are connected to a terminal b and a terminal a, respectively, with the result that the speed control is performed according to the orientation speed command. Thus, as illustrated in FIG. 7, the motor rotational speed is gradually reduced to an orientation speed. In a position control system, a positional deviation between a position command designating a position in one rotation of the motor at which the rotor is to be stopped and the position of the rotor detected by the position sensor S is computed and input to the position controller PC. The position controller PC computes a speed command value from a position loop based on the positional deviation. When the speed command value becomes equal or less than the orientation speed command value, the switch S2 is switched and connected to the terminal b for position control. Afterward, a position control of the motor M is performed based on the speed command from the position controller PC and, when the position of the rotor of the motor comes to the designated stop position, the motor is stopped. When the motor M is stopped, an orientation completion signal is output and thus a fixed-position stop control is completed.
Conventionally, when the gain of the position controller PC is increased for the purpose of reducing the time required for positioning, the torque is saturated to make it difficult to achieve tracking control of the motor M, causing overshoot. Therefore, the position control gain needs to be set to an appropriate value so as not to cause overshoot, and thus the reduction in the time required for positioning could not be achieved. An improvement in processing efficiency is essential in a working machine for increased productivity, and thus a reduction in the time required for the rotor to be stopped at a fixed position is strongly demanded.
As a conventional technique for reducing the time required for positioning, there is known a method as disclosed in Japanese Pat. Appln. Laid-Open Publication No. 5-228794 (JP05-228794A). In the conventional method, the transfer function of a position controller is modeled using a square-root function to thereby achieve a reduction in the time required for positioning. However, when this technique is realized by using software in a control system, much processing time is taken for computation of a square-root, and thus it seems that this method is impractical.
As another conventional technique for reducing the time required for positioning, there is known a method as disclosed in Japanese Pat. Appln. Laid-Open Publication No. 2007-172080 (JP2007-172080A). In this technique, an acceleration command is generated based on acceleration detected by an acceleration detection means, and motor control is performed so as not to allow the acceleration related to a moving command to exceed the acceleration of a rotary shaft. However, Japanese Pat. Appln. Laid-Open Publication No. 2007-172080 does not describe how to compute the moving command for actual application of this technique. Thus, only by reading the publication, this technique cannot be embodied. Further, in the technique disclosed in the publication, it is conceivable that a considerable amount of time is taken for processing computation.
Meanwhile, a sliding mode control is known as a method for positioning control of the motor. An example in which the sliding mode control is applied to the positioning of a magnetically-suspended linear motor is disclosed in a literature titled "Position control of propulsion or floating use style LIM using a sliding mode", 1990 National Convention of the Institute of Electrical Engineers of Japan 738. In the technique disclosed in this literature, the sliding mode control is used to stop a vehicle that travels while receiving a constant braking force at a fixed position. In this example, the traveling state of the vehicle is modeled as a sliding curve, and the vehicle is stopped according to the sliding curve.

If the sliding mode control is applied to a control system, an increase in robustness can be expected in general. However, in the technique disclosed in the above literature, processing algorithm mainly consists of computation of the sliding curve, but internal physical parameters are not explicitly treated. In conventional motor control systems, the physical parameters of control sections are explicitly treated. In motor control systems as products, speed and torque limitation are performed and a filter for suppressing resonance in accordance with an actual mechanical system, so that the physical parameters of the control sections need to be explicitly treated. However, in the technique disclosed in the above literature, the physical parameters of the control sections cannot be explicitly treated, which makes it difficult for this technique to be applied to the motor control systems as products.

SUMMARY OF THE INVENTION

An object of the present invention is to provide a motor control method and a motor control system capable of achieving positioning of a motor at high speed while decelerating the motor with as large a torque as possible and while achieving a reduction in overshoot at the positioning time.

Another object of the present invention is to provide a motor control method and its system enabling use of sliding mode control in which the position and speed of a rotor are controlled according to a sliding curve defined using physical parameters used for orientation control.

According to a method of controlling a motor of the present invention, sliding mode control is performed to control a motor and stop a rotor of the motor at a fixed position. In the speed control, a rotational speed of a rotor is controlled such that the rotational speed of the rotor coincides with a commanded speed designated by a rotational speed command, by inputting a deviation between the rotational speed and the commanded speed to a speed controller to obtain a torque command and inputting the torque command to a torque controller. In orientation control, when an orientation speed command is input, a rotational speed of a rotor is controlled such that the rotational speed of the rotor coincides with a orientation speed designated by the orientation speed command, by inputting a deviation between the rotational speed and the orientation speed to the speed controller to obtain the torque command and inputting the torque command to the torque controller. After the rotational speed of the rotor has coincided with the orientation speed, the control mode is changed to sliding mode control. In the sliding mode control, a positional deviation between the position of the rotor and a position designated by a position command designating a position at which the rotor is to be stopped in one rotation thereof is computed. Then, a position loop speed command is obtained by inputting the positional deviation to the position controller. A squared speed is obtained by squaring the rotational speed and encoding the result of squaring. The torque command is obtained by computing a deviation between the position loop speed command and the squared speed and then inputting the deviation to the speed controller. The torque command is input to the torque controller. In the present invention, the sliding mode control is performed in which the position and speed of the rotor are controlled according to a sliding curve defined by using physical parameters used for the orientation control to stop the rotor at a target position. The sliding curve is used for generating the torque command to be input to the torque controller. The sliding curve is defined by using physical parameters used for the orientation control, and the use of the sliding curve allows the sliding mode control to be effected.

For example, when the positional deviation is larger than a preset value, the gain of the position controller is set to a value proportional to a deceleration torque and inversely proportional to the inertia of the motor and a mechanical system; an added torque command is obtained by adding a torque addition command for obtaining a torque, which has a value obtained by subtracting a control margin from the maximum torque of the motor, to the torque command; and the added torque command is given to the torque controller. When the positional deviation is not larger than a preset value or is reduced to the preset value or less, the torque addition command is set to zero or a value close to zero, and the gain of the position controller is set to a value that compensates for a steady-state deviation. As a result, it is possible to apply the sliding mode control to the existing motor control system without significantly changing the configuration of the existing motor control system.

More specifically, in the sliding mode control, the sliding curve is set with a deceleration torque set constant. The added torque command Tcmd to be given to the torque controller is set so as to satisfy Tcmd $=T+KS$, where T is the torque addition command, K is the gain of the speed controller, and S is the function of the sliding curve defined by using physical parameters in a loop including the position controller that determines the input to the speed controller. The function S is represented as $S = C\Delta x \pm V^2$, where v is the rotational speed, $\Delta x$ is the positional deviation, and C is the gain of the position controller, and $V^2$ is added ("+") when $V<0$ and $V^2$ is subtracted ("-") when $v \geq 0$. The gain C is represented as $C = 2(T1/J)$ when $\Delta x > x_0$ is satisfied and as $C = C_0$ when $\Delta x \leq x_0$ is satisfied, where $x_0$ is a preset value, T1 is a deceleration torque, j is the inertia of the motor and a mechanical system, and $C_0$ is the gain of the position controller for compensating for a steady-state deviation. With the above, the physical parameters used in the sliding mode control can be related to the parameters, such as the gain of the position controller, positional deviation, and torque addition, used in a conventional motor control system. Thus, it is possible to apply the sliding mode control to the existing motor control system.

The speed controller may preferably perform controls as follows. During the speed control and orientation control, the speed controller performs proportional-integral control; during the sliding mode control. During the sliding mode control, the speed controller performs the proportional control until a predetermined time before the rotor reaches the target position. After the predetermined time before the rotor reaches the target position, the speed controller performs the proportional-integral control. In other words, during the sliding mode control, the speed controller performs the proportional control in a predetermined period of time. After the predetermined period of time, the speed controller performs the proportional-integral control until the rotor reaches the target position.

The position command to be input to the position controller may arbitrarily be determined. However, by determining the position command as follows, it is possible to achieve the rotor at a position within one rotation of the motor in the shortest time. That is, the minimum n that satisfies the following two expressions are computed:

```
n ≥ ((squared speed)/(gain of position controller)
+ position feedback - positional shift amount)/(2π ×
a);
```

and

```
n   <   ((squared   speed)/(gain   of   position
controller)  +  position  feedback  -  positional  shift
amount)/(2π × a) + 1
```

$n \geq$ ((squared speed)/(gain of position controller) + position feedback - positional shift amount)/($2\pi$ x a); and
$n <$ ((squared speed)/(gain of position controller) + position feedback - positional shift amount)/ ($2\pi$ x a) + 1

where a is the resolution of a rotor position detector per one rotation of the rotor, and the position command is defined using the equation "position command = n x $2\pi$ + positional shift amount".

A motor control system that performs a motor control method according to the present invention comprises a speed detector, a first selection section, a position detector, a position loop, a second selection section, a speed controller, an addition section, a torque controller, and a control section. The speed detector is configured to detect the rotational speed of a rotor of the motor and outputs the detected rotational speed and the squared speed that is obtained by encoding the result of squaring the rotational speed. The first selection section is configured to select an output of the speed detector. The position detector is configured to detect the rotational position of the rotor. As the speed detector and detection section (sensor section) of the position detector, a single detector having the speed detection and position detection functions may be used. The position loop includes a positional deviation computation section and a position controller. The positional deviation computation section is configured to compute a positional deviation between the rotational position and a position designated by a position command designating a position at which the rotor is to be stopped in one rotation thereof, and the position controller is configured to input thereto the positional deviation and output a position loop speed command. The second selection section is configured to select one of a rotational speed command output from an upper controller, an orientation speed command designating orientation speed, and the position loop speed command. The speed deviation computation section is configured to compute a speed deviation between the designated speed designated by one speed command selected by the second selection section and the rotational speed or squared speed selected by the first selection section. The speed controller is configured to input thereto an output from the speed deviation computation section and outputs a torque command. The addition section is configured to add a torque addition command to the torque command and outputs an added torque command. The torque controller is configured to input thereto the added torque command and outputs a current command. The control section is configured to make the first selection section select the rotational speed and the second selection section select the rotational speed command in a steady-state control operation, in order to perform a speed control of the rotational speed of the rotor such that the rotational speed of the rotor coincides with a commanded speed designated by a rotational speed command.

When the orientation speed is input, the control section makes the first selection section select the rotational speed and second selection section select an orientation speed command, in order to perform an orientation control such that the rotational speed of the rotor coincides with a orientation speed designated by the orientation speed command, by inputting a deviation between the orientation speed command and rotational speed to the speed controller to obtain the torque command and inputting the torque command to the torque controller. After the rotational speed of the rotor has coincided with the orientation speed, the control section makes the first selection section select the squared speed and second selection section select the position loop speed command, in order to perform a sliding mode control to stop the rotor at a target position. The sliding mode control computes a deviation between the position loop speed command and the squared speed; outputs the deviation to the speed controller to obtain the torque command; inputs the torque command to the torque controller; and controls the speed and the position of the rotor according to a sliding curve defined by using physical parameters used for the orientation control.

According to the motor control system of the present invention, the position and speed of the rotor are controlled according to the sliding curve defined using the physical parameters used for the orientation control, so that it is possible to easily realize stop operation based on the sliding mode control by using the configuration as that of the existing motor control system.

The sliding curve to be used in this case is defined such that: when the positional deviation is larger than a preset value, the gain of the position controller is set to a value proportional to a deceleration torque and inversely proportional to the inertia of the motor and a mechanical system; and an added torque command is obtained by adding a torque addition command for obtaining a torque, which has a value obtained by subtracting a control margin from the maximum torque of the motor, to the torque command; and the added torque command is given to the torque controller. When the positional deviation is not larger than the preset value or is reduced to the preset value or less, the torque addition command is set to zero or a value close to zero, and the gain of the position controller is set to a value that compensates for a steady-state deviation.

BRIEF DESCRIPTION OF THE DRAWINGS

FIG. 1 is a block diagram illustrating a configuration of a motor control system that performs a method of controlling a motor according to the present invention.
FIG. 2 is a view illustrating an operation waveform for explaining the operation state of an embodiment of FIG. 1.
FIG. 3 is a view for explaining sliding mode control.
FIGS. 4A to 4G are time charts illustrating simulation results of fixed-position stop control, which are used for explaining the operation of the embodiment illustrated in FIG. 1.
FIGS. 5A to 5G are time charts illustrating simulation results of fixed-position stop control performed using a conventional method.
FIG. 6 is a block diagram illustrating an example of a configuration of a conventional motor control system.
FIG. 7 is an operation waveform diagram illustrating operation of the conventional motor control system.

DESCRIPTION OF THE PREFERRED EMBODIMENTS

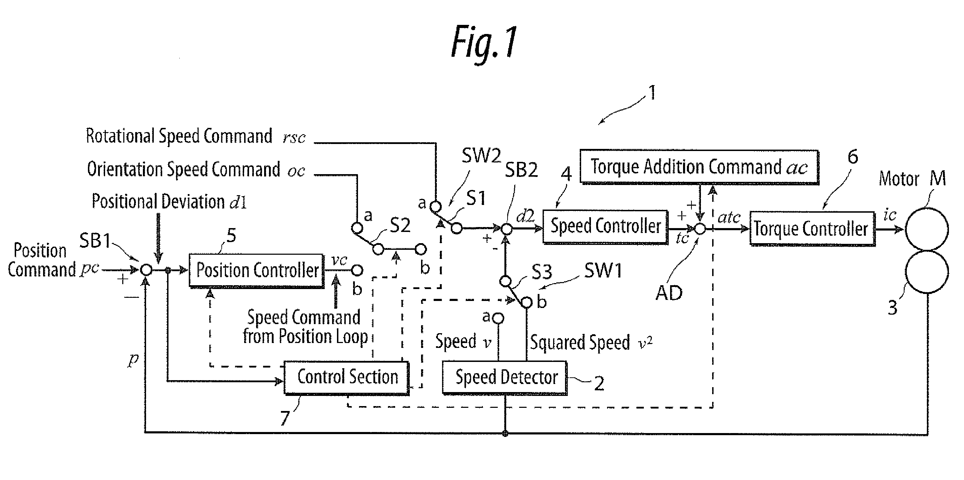

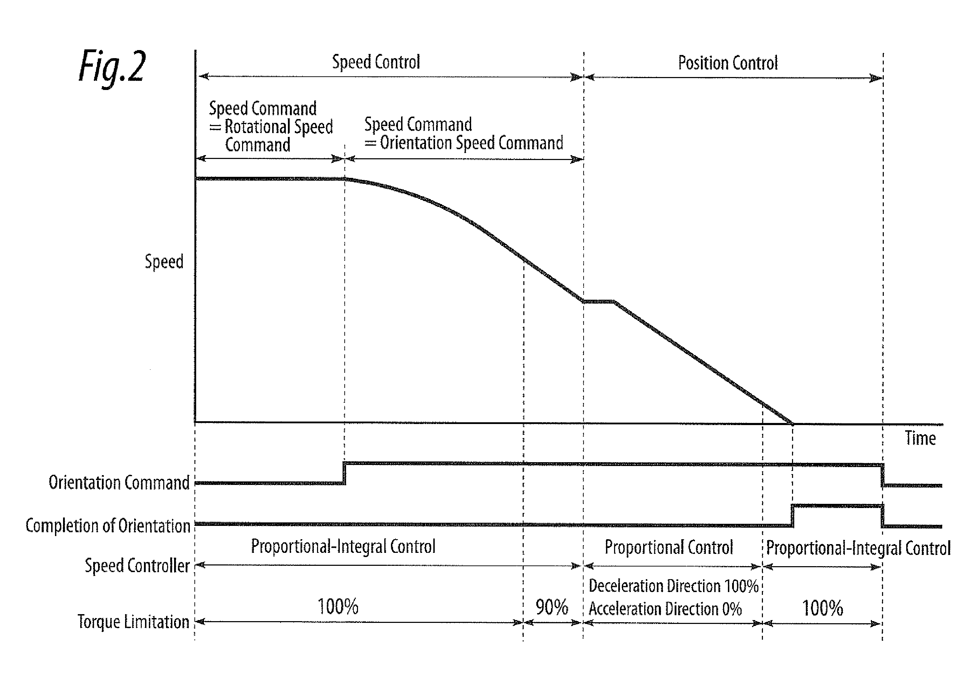

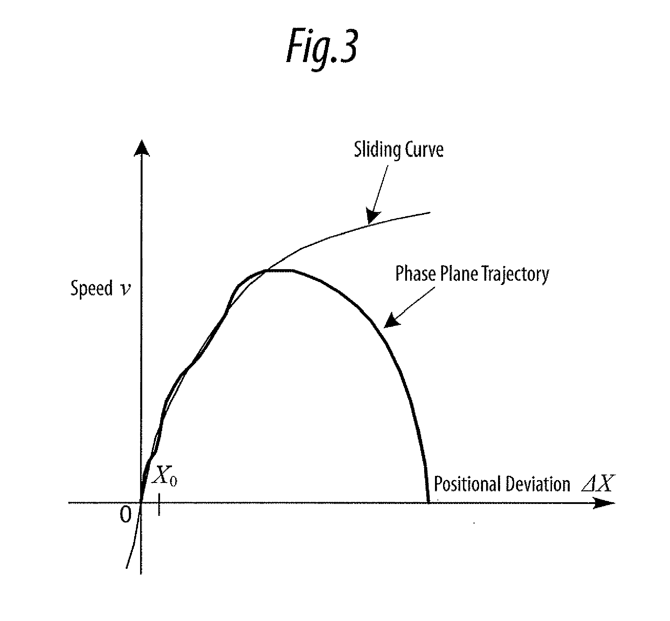

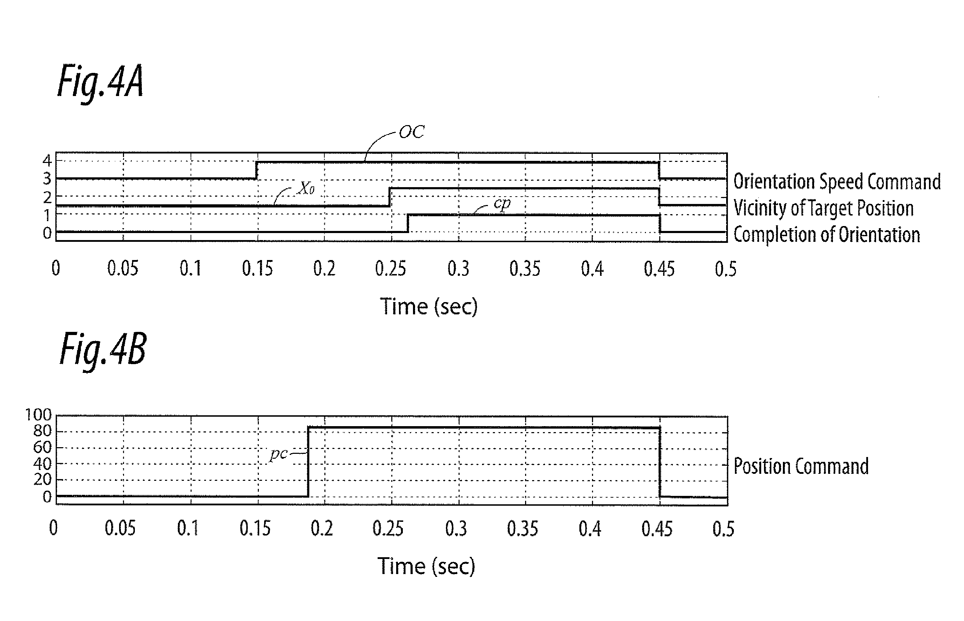

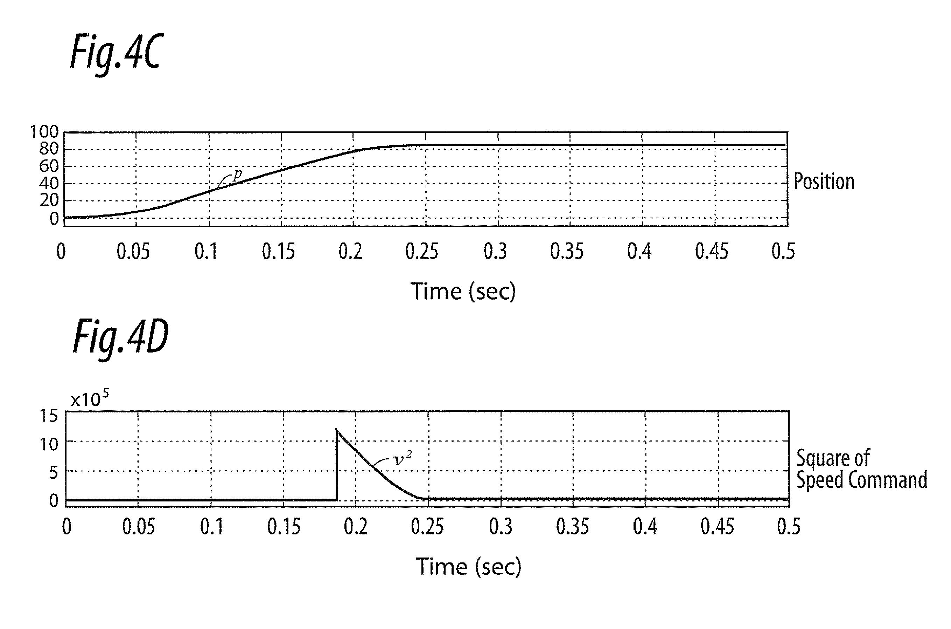

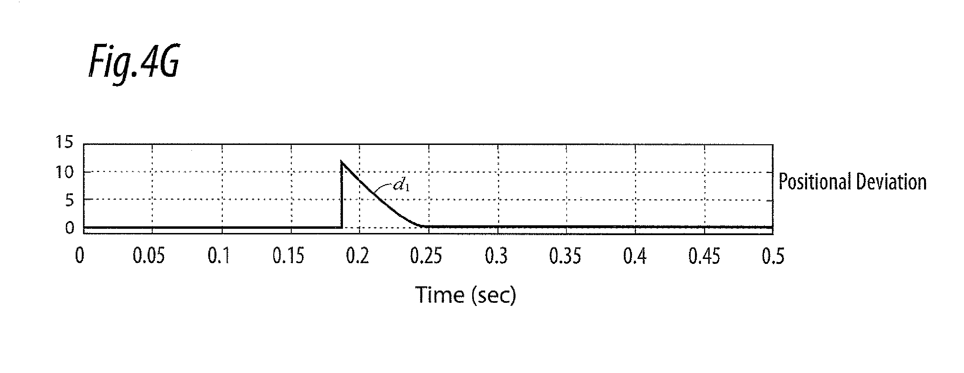

An embodiment of the present invention will be described in detail below with reference to the accompanying drawings. FIG. 1 is a block diagram illustrating a configuration of a motor control system 1 that performs a motor control method according to the present invention. FIG. 2 is a view illustrating an operation waveform for explaining the operation state of an embodiment of FIG. 1. FIG. 3 is a view for explaining sliding mode control. FIGS. 4A to 4G are time charts illustrating simulation results of fixed-position stop control, which are used for explaining the operation of the embodiment illustrated in FIG. 1. The motor control system 1 according to the present embodiment includes a speed detector 2, an encoder 3 constituting a position detector, a speed controller 4, a position controller 5, a torque controller 6, a control section 7, a first selection section SW1, a second selection section SW2, a positional deviation computation section SB1, a speed deviation computation section SB2, and addition section AD. The speed detector 2 detects the rotational speed of a rotor of a motor M based on an output from the encoder 3 and outputs a rotational speed v and a squared speed $v^2$ [refer to FIG. 4D] obtained by squaring the rotational speed and encoding the squaring result. The first selection section SW1 selects an output of the speed detector 2 based on a command from the control section 7 to be described later. The encoder 3 constituting a position detector detects the rotational position of the rotor of the motor M. In the present embodiment, the encoder 3 is used as a detection section (sensor section) of the speed detector 2. The positional deviation computation section SB1 computes a positional deviation d1 [refer to FIG. 4G] between a position designated by a position command pc [refer to FIG. 4B] designating a position at which the rotor is to be stopped in one rotation thereof and a rotational position p [FIG. 4C] output from the encoder 3. The position command pc is output from a not illustrated upper controller. The position controller 5 inputs thereto the positional deviation d1 and outputs a position loop speed command vc. In the present embodiment, a loop including the positional deviation computation section SB1 and position controller 5 constitutes the position loop.

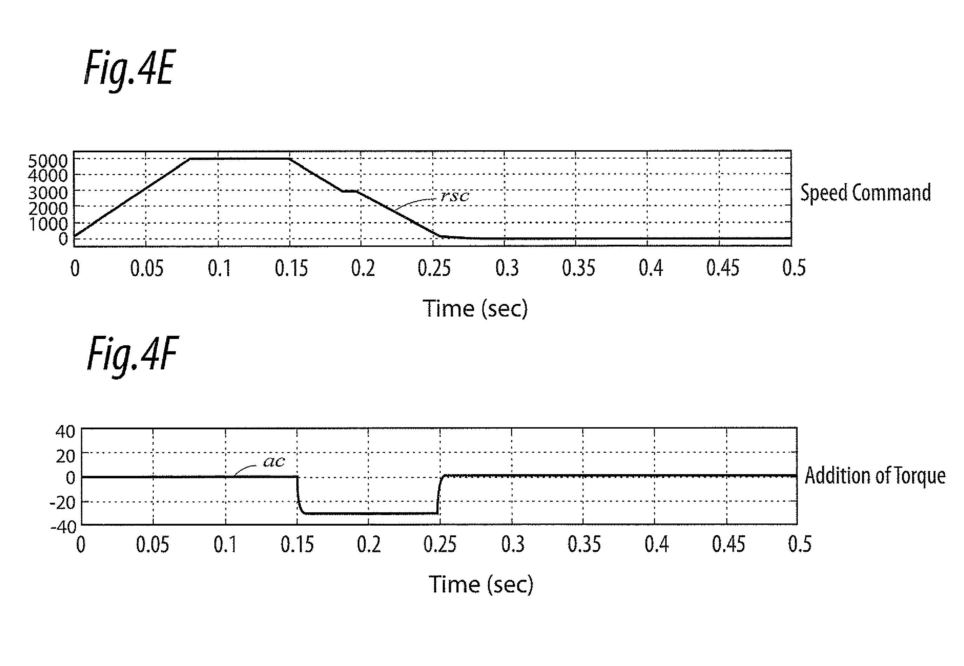

The second selection section SW2 switches contacts S1 and S2 according to a switching command from the control section 7 so as to select one of a rotational speed command rsc [refer to FIG. 4E] output from the upper controller, not illustrated, an orientation speed command oc [refer to FIG. 4A] designating an orientation speed, and a position loop speed command vc. The speed deviation computation section SB2 computes a speed deviation d2 between the designated speed designated by one speed command selected by the second selection section SW2 and rotational speed v or squared speed $v^2$ [refer to FIG. 4D] selected by the first selection section SW1.

The speed controller 4 inputs thereto the output (d2) of the speed deviation computation section SB2 and generates a torque command tc. The addition section AD adds a torque addition command ac [refer to FIG. 4F] to the torque command tc so as to generate and output an added torque command atc. The torque controller 6 inputs thereto the added torque command atc and outputs a current command ic. The current command ic is input to a motor drive section which drives the motor M.

In steady-state control operation, during which the motor M is operated based on the rotational speed command rsc output from the not illustrated upper controller, the control section 7 outputs the switching command to the first selection section SW1 such that the contact S3 of the first selection section SW1 selects the rotational speed v and outputs the switching command to the second selection section SW2 such that the contact S1 of the second selection section SW2 selects the rotational speed command rsc. The speed deviation computation section SB2 outputs to the speed controller 4 the speed deviation d2 between the rotational speed designated by the rotational speed command rsc and the rotational speed v output from the speed detector 2. At this time, the addition section AD does not perform addition but outputs, without change, the torque command tc output from the speed controller 4 to the torque controller 6. Thus, during the steady-state control operation, a speed control is performed according to the rotational speed command rsc from the upper controller.

When stopping the motor M at a fixed position, the control section 7 outputs, for performing the orientation control, the switching commands to the first selection section SW1 and second selection section SW2 such that the contact S3 of the first selection section SW1 selects the rotational speed v and contacts S1 and S2 of the second selection section SW2 select the orientation speed command oc. Then, the speed deviation computation section SB2 outputs to the speed controller 4 the speed deviation d2 between the orientation speed designated by the orientation speed command oc and the rotational speed v output from the speed detector 2. At this time, the addition section AD does not perform addition but outputs, without change, the torque command tc output from the speed controller 4 to the torque controller 6. Thus, during the orientation control, the rotational speed is gradually reduced to the orientation speed designated by the orientation speed command oc from the upper controller.

After the rotational speed of the rotor has been reduced to the orientation speed, the control section 7 outputs the switching command to the first selection section SW1 such that the contact S3 of the first selection section SW1 selects the squared speed $v^2$ and outputs the switching command to the second selection section SW2 such that the contacts S1 and S2 of the second selection section SW2 select the position loop speed command vc. The speed deviation computation section SB2 outputs to the speed controller 4 a deviation between the speed designated by the position loop speed command vc and the squared speed $v^2$ output from the speed detector 2. At this time, the addition section AD adds the torque addition command ac determined by the control section 7 to the torque command tc output from the speed controller 4 and gives the obtained added torque command atc to the torque controller 6.

In the present embodiment, the input to the torque controller 6 is adjusted so as to perform sliding mode control. In the present embodiment, the position and speed of the rotor are controlled according to a sliding curve defined by using physical parameters used for the orientation control so as to stop the rotor at a target position. The sliding curve, which is used for generating the torque command to be input to the torque controller 6, is defined by using physical parameters used for the orientation control so as to achieve the sliding mode control.

In the present embodiment, the sliding curve is used in a function for obtaining the torque addition command ac to be added to the torque command tc output from the speed controller 4. The sliding curve to be used in this case is defined so as to satisfy the following two conditions. The first condition is that when the positional deviation d1 is larger than a preset value, a gain C of the position controller 5 is set to a value proportional to a deceleration torque T and inversely proportional to an inertia J of the motor, and that the added torque command atc is given to the torque controller 6. The added torque command atc is obtained by adding the torque addition command ac to the torque command tc. The torque addition command ac is a command for obtaining a torque having a value obtained by subtracting a control margin from the maximum torque of the motor M. The second condition is that when the positional deviation d1 is not larger than the preset value or is reduced to the preset value or less, the torque addition command ac is set to zero or a value close to zero [refer to FIG. 4F], and the gain C of the position controller 5 is set to a value that compensates for a steady-state deviation.

The sliding mode control used in the present embodiment will be described more in detail. In the sliding mode control used in the present embodiment, the sliding curve is set as a deceleration torque is constant, and the position and speed of the motor are controlled so as to follow the set sliding curve. Assuming that the constant deceleration torque is set to -T1, the motion equation of the motor that is being decelerated can be represented as follows:

$$J \cdot d\Delta v \ / \ dt - T1 \ = \ 0 \ \cdots \cdots \ (1)$$

where J is inertia of the motor, $\Delta v$ is speed deviation. Assuming that the positional deviation is $\Delta x$, $\Delta v = d\Delta x/dt$ is satisfied, so that the expression (1) can be represented as follows:

$$C1\Delta x - \Delta v^2 \ = \ 0 \ \cdots \cdots \ (2)$$

where C1 = 2(T1/J) is satisfied. Thus, a sliding curve S can be represented as follows:

$$S \ = \ C\Delta x \ \pm \ V^2 \ \cdots \cdots \ (3)$$

where $v^2$ is added when V<0 and $V^2$ is subtracted when v $\geq 0$ .

Further, in the above expression (3), when $\Delta x > x_0$ is satisfied, C = 2 (T1/J) is satisfied, and when $\Delta x \leq x_0$ is satisfied, C = $C_0$ is satisfied. Here, $X_0$ [refer to FIG. 4A] is a preset value corresponding to a position close to the target position. $C_0$ is a minute value for compensating for the steady-state deviation. Until the positional deviation $\Delta x$ reaches the vicinity of the present value $X_0$ corresponding to the target position, the deceleration torque -T1 is a center of the sliding mode control. After the positional deviation $\Delta x$ becomes the present value $X_0$ or less, the deceleration torque becomes zero, so that the value of C becomes mathematically zero. In the present embodiment, however, C is set to the minute value $C_0$ as compensation for the steady-state deviation. Thus, the added torque command atc can be represented as follows:

$$Tcmd \ = \ T + KS \ \cdots \cdots (4)$$

That is, Tcmd = T+KS = T+K ($C\Delta x \pm v^2$) is satisfied. In the above expression (4), when $\Delta x > x_0$ is satisfied, T = -T1 is satisfied, and when $\Delta x \leq x_0$ is satisfied, T = 0 is satisfied. K is a constant.
FIG. 3 illustrates the sliding curve used in the control of the present embodiment. A phase plane trajectory illustrated in FIG. 3 is a trajectory determined by the positional deviation and speed obtained when the motor is moved from a given position to a target position. As illustrated in FIG. 3, when the sliding mode control is performed, the rotor of the motor is moved to a stop position according to the sliding curve.
In the present embodiment, a sliding mode control system and a conventional motor control system are compared so as to relate the physical parameters thereof to each other as follows. Therefore, it is possible to apply the sliding mode control to the existing motor control system without significantly changing the configuration of the existing motor control system.

- Parameter T is set as torque addition amount
- Parameter C is set as gain of position controller 5
- Parameter $\Delta x$ is set as positional deviation
- Parameter K is set as gain of speed controller 4
- Parameter $\pm v^2$ is set as squared speed

Thus, the control can be performed with the parameters for the sliding mode control related to the physical parameters that have been used in the conventional control system, such as the gain of the position controller 5, positional deviation, and torque addition etc.
In the case where a rotor of the motor deviates from the vicinity of the target position, it is preferable that the torque addition T1 is set as T1 = maximum torque of the motor $\times$ 90%, and the gain C of the position controller 5 is set as C = 2(T1/J).

Where J is the inertia of the motor and a mechanical system, and K is the gain of the speed controller 4. The torque addition T1 is set to 90% of the maximum torque, with a 10% control margin assured, so that it is possible to drive the motor with as large a torques as possible. The speed controller 4 is configured to perform proportional control so as to achieve operation according to the sliding curve. As the speed control gain K, an optimum value is obtained through experiments.

When the positional deviation becomes small and reaches to the value $x_0$ corresponding to a position close to the target position, the torque addition T, gain C of the position controller 5, and gain K of the speed controller 4 are set as follows:

$$T = 0,$$
$$C = C_0, \text{ and}$$
$$K = K_0$$

As the $C_0$ and $K_0$, values required to suppress the steady-state deviation and to prevent occurrence of positioning error are previously defined through experiments. In this case, the speed controller 4 is preferably configured to perform proportional-integral control. The configuration of the speed controller 4 may previously be set so as to allow this setting change to be made based on a command from the control section 7. In the case where the control system is realized by software, this setting change can easily be achieved by a program. With such a configuration, the fixed-position stop control can be performed while suppressing the steady-state deviation and preventing occurrence of positioning error.

As illustrated in FIG. 2, after the control mode is changed to the sliding mode control, the speed command is limited to not more than a speed limiting command value from the upper controller, and the torque command is limited to 90% from the time slightly before the rotational speed reaches to the orientation speed until the time when the control mode is changed to the sliding mode control. At this time, the speed controller 4 performs the proportional-integral control. Then, from the time when the control mode is changed to the sliding mode control to the time when the positional deviation reaches to the vicinity of the target position, a torque command in the acceleration direction is limited to 0% while a torque command in the deceleration direction is set to 100% so that the motor speed does not exceed the orientation speed. At this time, the speed controller 4 performs the proportional control. From the time slightly before the stop, the torque limitation is set back to 100% and then, the speed controller 4 performs the proportional-integral control. By limiting the speed command and torque command, it is possible to make the operation of the sliding mode control smooth. After the motor has stopped, an orientation completion signal cp is output.

The position command pc at the time point when the control mode is changed to the sliding mode control is computed as follows.

First, the minimum n that satisfies the following two expressions is computed:

```
n ≥ ((squared speed)/(gain of position controller)
+ position feedback - positional shift amount)/(2π ×
a)
```

```
n < ((squared speed)/(gain of position
controller) + position feedback - positional shift
amount)/(2π × a) + 1
```

where a is an encoder pulse resolution per one rotation of the rotor. Then, the position command pc is defined as follows:

```
position command pc = n × 2π + positional shift
amount
```

By giving such a position command, it is possible to achieve positioning of the rotor at a position within one rotation of the motor in the shortest time. According to the above expression, the position command pc is output from the not illustrated upper controller.

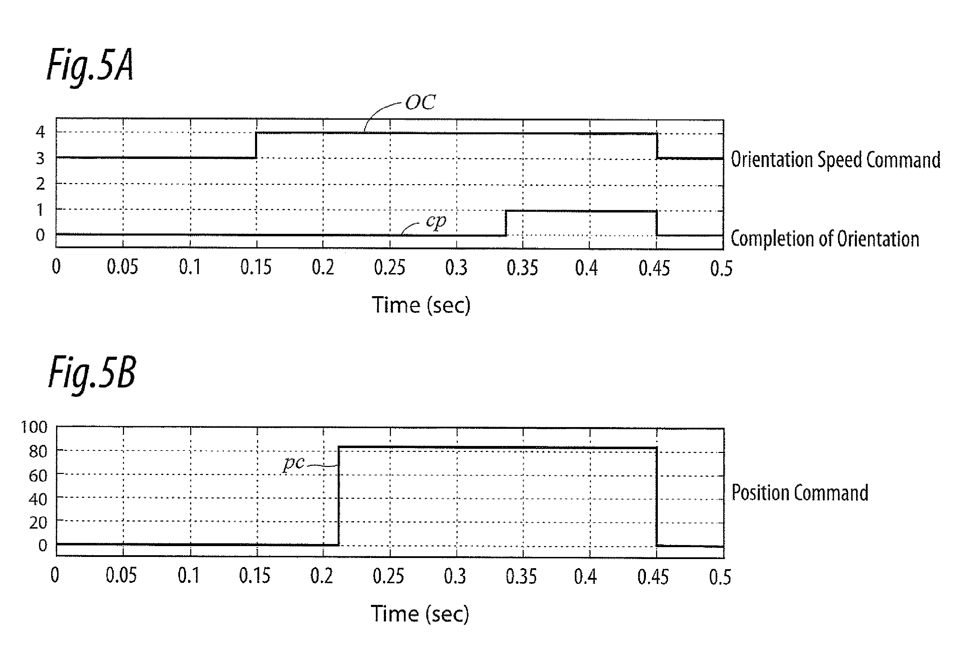

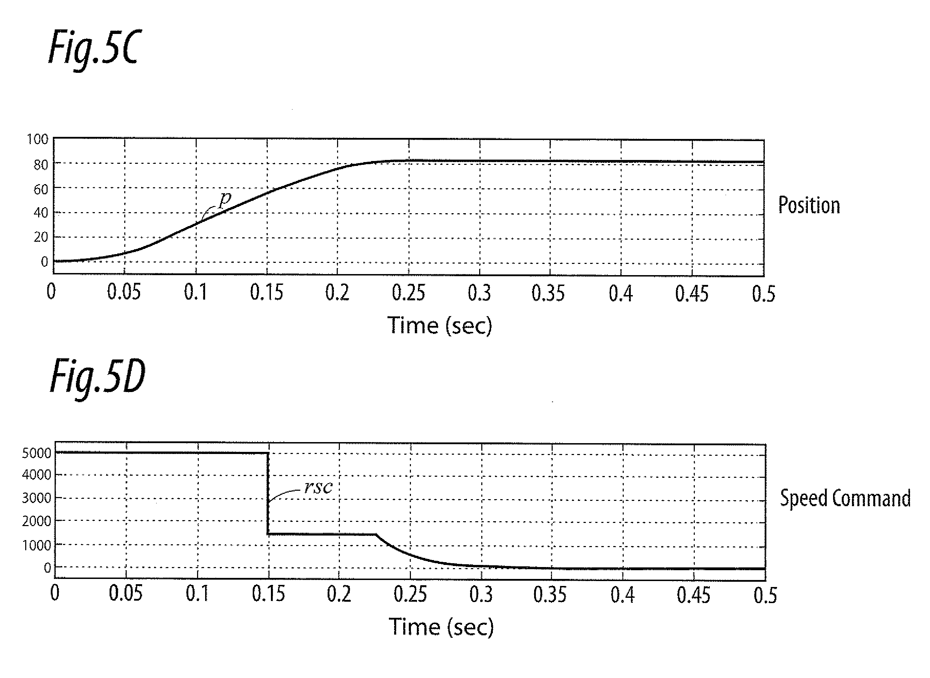

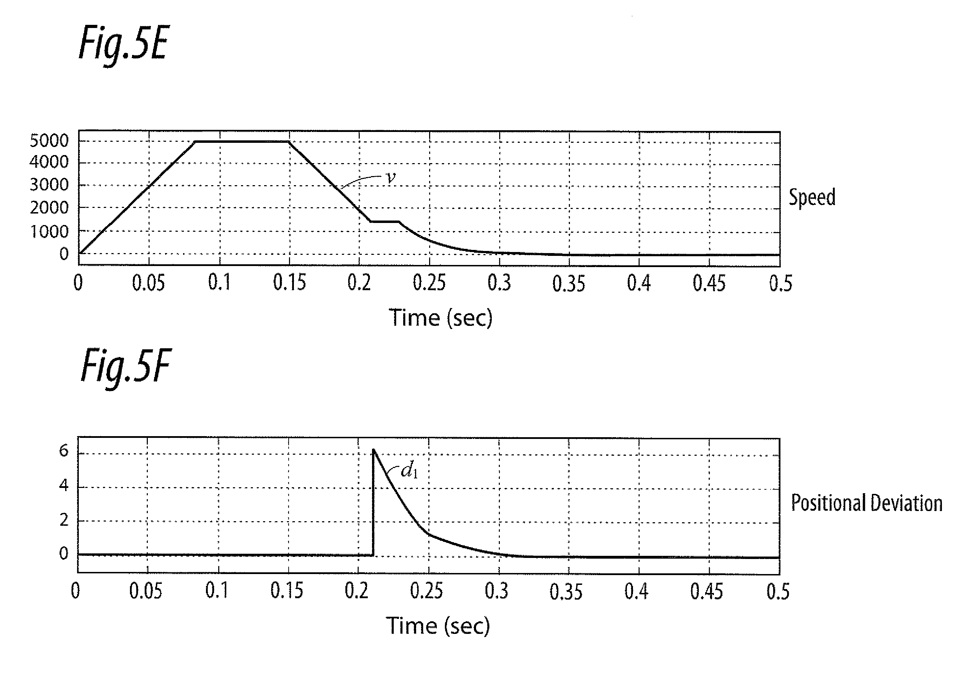

FIGS. 5A to 5F are time charts illustrating simulation results of fixed-position stop control performed using a conventional method. As is clear from a comparison between the positional deviation signal d1 of FIG. 4G and that of FIG. 5F, the positional deviation signal d1 reaches to zero (the rotor is stopped at a fixed position) earlier in the present embodiment than the conventional method.

As a matter of course, all of the main parts in the above embodiment may be realized by software.

In the above embodiment, the control section 7 preferably includes an automatic tuning section. During the orientation control, the automatic tuning section computes acceleration and determines the gain C of the position controller 5 based on the maximum value of the acceleration. If the control section 7 has such an automatic tuning function, it is possible to realize a motor control system capable of detecting a change in the load inertia of the motor M at high speed and achieving fixed-position stop control at high speed even when the load inertia of the motor M is changed.

According to the present invention, the physical parameters of the control sections used in the sliding mode control are treated in correspondence with the physical parameters of the existing motor control system. Thus, according to the present invention, adequate meaning can be attached to the physical parameters of the control system, allowing the sliding mode control to be applied to the fixed-position stop control. Further, according to the present invention, a function of suppressing the steady-state deviation in the conventional motor control system can be utilized. Furthermore, according to the present invention, the trajectory of the position of the rotor is incorporated to the control system as the sliding curve, so that even when the positioning of the motor is performed by giving a certain target position as the position command, it is possible to realize highspeed fixed-position stop control while suppressing overshoot. Further, the position command can be computed so as to allow the rotor to be positioned at a position within one rotation of the motor in the shortest time. Thus, when the present invention is applied to, e.g., control of a main shaft motor, the time required for positioning stop can be reduced significantly.

**Claims**

1.   A method of controlling a motor comprising the steps of:

performing a speed control of a rotational speed (v) of a rotor of the motor such that the rotational speed (v) of the rotor coincides with a commanded speed designated by a rotational speed command (rsc), by inputting a deviation between the rotational speed (v) and the commanded speed to a speed controller (4) to obtain a torque command (tc) and inputting the torque command (tc) to a torque controller (6);

performing a orientation control of the rotational speed (v) of the rotor, when an orientation speed command (oc) is input, such that the rotational speed (v) of the rotor coincides with a orientation speed designated by the orientation speed command (oc), by inputting a deviation between the rotational speed (v) and the orientation speed to the speed controller (4) to obtain a torque command (tc) and inputting the torque command (tc) to the torque controller (6); and

adjusting an input of the torque controller (6), after the rotational speed (v) of the rotor has coincided with the orientation speed, such that a sliding mode control is performed to stop the rotor at a target position, **characterized in that**:

the sliding mode control comprises the steps of:

computing a positional deviation (d1) between the position of the rotor and a commanded position designated by a position command (pc) for designating a position at which the rotor is to be stopped in one rotation thereof;

inputting the positional deviation (d1) to the position controller (5) to obtain a position loop speed command (vc);

squaring the rotational speed (v) and encoding the result of squaring to obtain a squared speed ($V^2$)

computing a deviation between the position loop speed command (vc) and the squared speed ($V^2$);

outputting the deviation to the speed controller (4) to obtain the torque command (tc);

inputting the torque command (tc) to the torque controller (6); and

controlling the speed and the position of the rotor according to a sliding curve defined by using physical parameters used for the orientation control.

2.   The method of controlling a motor according to claim 1, wherein:

in the sliding mode control,
when the positional deviation (d1) is larger than a preset value, the gain of the position controller (5) is set to a value proportional to a deceleration torque and inversely proportional to the inertia (J) of the motor;
an added torque command (atc) is obtained by adding a torque addition command (ac) for obtaining a torque, which has a value obtained by subtracting a control margin from a maximum torque of the motor, to the torque command (tc), and the added torque command (atc) is given to the torque controller (6); and
when the positional deviation (d1) is reduced to the preset value or less, the torque addition command (ac) is set to zero or a value close to zero, and the gain of the position controller (5) is set to a value that compensates for a steady-state deviation.

3. The method of controlling a motor according to claim 2, wherein:

in the sliding mode control,
the sliding curve is set with a deceleration torque set constant;
the added torque command Tcmd to be given to the torque controller (6) is set so as to satisfy Tcmd = T+KS, where T is the torque addition command (ac), K is the gain of the speed controller (4), and S is the function of the sliding curve defined by using physical parameters in a loop including the position controller (5) that determines the input to the speed controller (4);
the function S is represented as $S = C\Delta x \pm v^2$, where v is the rotational speed (v), $\Delta x$ is the positional deviation (d1), and C is the gain of the 2
position controller (5), and $V^2$ is added when V<0 and $V^2$ is subtracted when $v \geq 0$; and
the gain C is represented as C = 2 (T1/J) when $\Delta x > x_0$ is satisfied and as C = Co when $\Delta x \leq x_0$ is satisfied, where $x_0$ is a preset value, T1 is a deceleration torque, j is the inertia (J) of the motor, and $C_0$ is the gain of the position controller (5) for compensating for a steady-state deviation.

4. The method of controlling a motor according to claim 1, wherein:

during the speed control and orientation control, the speed controller (4) performs proportional-integral control;
during the sliding mode control, the speed controller (4) performs the proportional control until a predetermined time before the rotor reaches the target position; and
after the predetermined time before the rotor reaches the target position, the speed controller (4) performs the proportional-integral control.

5. The method of controlling a motor according to claim 1, 2, or 3, wherein:

a minimum n that satisfies the following two expressions is computed

```
     n ≥ ((squared speed)/(gain of position controller)
+ position feedback - positional shift amount)/(2π ×
a); and
```

```
     n  <   ((squared  speed)/(gain  of  position
controller) + position feedback - positional shift
amount)/(2π × a) + 1
```

where a is the resolution of a rotor position detector (3) per one rotation of the rotor, and
the position command (pc) is defined as position command = $n \times 2\pi$ + positional shift amount.

6. A motor control system, comprising:

a speed detector (2) configured to detect a rotational speed of a rotor of a motor and output the rotational speed and a squared speed ($V^2$) that is obtained by encoding the result of squaring of the rotational speed;

a first selection section (SW1) configured to select an output of the speed detector (2);

a position detector (3) configured to detect the rotational position of the rotor;

a position loop including a positional deviation computation section (SB1) and a position controller (5), the positional deviation computation section (SB1) being configured to compute a positional deviation (d1) between the rotational position (p) and a position designated by a position command (pc) designating a position at which the rotor is to be stopped in one rotation thereof, and the position controller (5) being configured to input thereto the positional deviation (d1) and output a position loop speed command (vc);

a second selection section (SW2) configured to select one of a rotational speed command (rsc) output from an upper controller, an orientation speed command (oc) designating an orientation speed, and the position loop speed command (vc);

a speed deviation computation section (SB2) configured to compute a speed deviation (d2) between the designated speed designated by one speed command selected by the second selection section (SB2) and the rotational speed (v) or the squared speed ($V^2$) selected by the first selection section (SB1);

a speed controller (4) configured to input thereto an output from the speed deviation computation section (SB2) and outputs a torque command (tc);

an addition section (AD) configured to add a torque addition command (ac) to the torque command (tc) and outputs an added torque command (atc);

a torque controller (6) configured to input thereto the added torque command (atc) and outputs a current command (ic); and

a control section (7) configured to perform control such that:

in a steady-state control operation, the first selection section (SW1) selects the rotational speed (v) and the second selection section (SW2) selects the rotational speed command (rsc), in order to perform a speed control of the rotational speed (v) of the rotor such that the rotational speed (v) of the rotor coincides with a commanded speed designated by a rotational speed command (rsc);

when an orientation speed command (oc) is input, the first selection section (SW1) selects the rotational speed (v) and second selection section (SW2) selects an orientation speed command (oc), in order to perform an orientation control such that the rotational speed (v) of the rotor coincides with a orientation speed designated by the orientation speed command (oc), by inputting a deviation between the orientation speed command (oc) and rotational speed (v) to the speed controller (4) to obtain the torque command (tc) and inputting the torque command (tc) to the torque controller (6); and

after the rotational speed (v) of the rotor has coincided with the orientation speed, the first selection section (SW1) selects the squared speed ($V^2$) and the second selection section (SW2) selects the position loop speed command (vc), in order to perform a sliding mode control to stop the rotor at a target position, the sliding mode control computing a deviation between the position loop speed command (vc) and the squared speed ($V^2$); outputting the deviation to the speed controller (4) to obtain the torque command (tc); inputting the torque command (tc) to the torque controller (6); and controlling the speed and the position of the rotor according to a sliding curve defined by using physical parameters used for the orientation control.

7. The motor control system according to claim 6, wherein:

in the sliding mode control,

when the positional deviation (d1) is larger than a preset value, the gain of the position controller (5) is set to a value proportional to a deceleration torque and inversely proportional to the inertia (J) of the motor; an added torque command (atc) is obtained by adding a torque addition command (ac) for obtaining a torque, which has a value obtained by subtracting a control margin from a maximum torque of the motor, to the torque command (tc); and the added torque command (atc) is given to the torque controller (6), and

when the positional deviation (d1) is reduced to the preset value or less, the torque addition command (ac) is set to zero or a value close to zero, and the gain of the position controller (5) is set to a value that compensates for a steady-state deviation.

8. The motor control system according to claim 7, wherein:

in the sliding mode control, with a deceleration torque set constant, the added torque command Tcmd to be given to the torque controller (6) is set so as to satisfy Tcmd = T+KS, where T is the torque addition command (ac), K is the gain of the speed controller (4), and S is the function of the sliding curve defined by using physical parameters in a loop including the position controller (5) and speed controller (4),
the function S is represented as $S = C\Delta x \pm V^2$, where v is the rotational speed (v), $\Delta x$ is the positional deviation (d1), and C is the gain of the position controller (5), and $V^2$ is added when V<0 and $V^2$ is subtracted when v $\geq$0; and the gain C is represented as $C = 2(T1/J)$ when $\Delta x>x_0$ is satisfied and as $C = C_0$ when $\Delta x \leq x_0$ is satisfied, where $x_0$ is a preset value, T1 is a deceleration torque, j is the inertia (J) of the motor, and Co is the gain of the position controller (5) for compensating for a steady-state deviation.

9. The motor control system according to claim 6, wherein
the control section performs control such that:

during the speed control and the orientation control, the speed controller (4) performs proportional-integral control;
during the sliding mode control, the speed controller performs the proportional control until a predetermined time before the rotor reaches the target position; and
after the predetermined time before the rotor reaches the target position, the speed controller (4) performs the proportional-integral control.

## Fig.1

Fig.2

# Fig.3

## Fig.4A

Orientation Speed Command
Vicinity of Target Position
Completion of Orientation

Time (sec)

## Fig.4B

Position Command

Time (sec)

EP 2 362 536 A2

## Fig.4C

Position

Time (sec)

## Fig.4D

Square of
Speed Command

Time (sec)

EP 2 362 536 A2

## Fig.4E

Speed Command

Time (sec)

## Fig.4F

Addition of Torque

Time (sec)

EP 2 362 536 A2

## Fig.4G

*Positional Deviation*

Time (sec)

## Fig.5A

## Fig.5B

EP 2 362 536 A2

## Fig.5C

Position

## Fig.5D

Speed Command

EP 2 362 536 A2

## Fig.5E

Speed

## Fig.5F

Positional Deviation

EP 2 362 536 A2

# Fig.6

EP 2 362 536 A2

# Fig.7

EP 2 362 536 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5228794 A

- JP 2007172080 A

**Non-patent literature cited in the description**

- Position control of propulsion or floating use style LIM using a sliding mode. National Convention of the Institute of Electrical Engineers of Japan, 1990, 738